(19) Europäisches Patentamt
European Patent Office
Office européen des brevets

(11) Veröffentlichungsnummer: **0 485 713 A1**

(12) **EUROPÄISCHE PATENTANMELDUNG**

(21) Anmeldenummer: **91115646.1**

(22) Anmeldetag: **14.09.91**

(51) Int. Cl.5: **C08L 77/00**, C08L 71/12, C08K 5/10, //(C08K5/10, C08L77:00,71:12)

(30) Priorität: **16.11.90 DE 4036561**

(43) Veröffentlichungstag der Anmeldung: **20.05.92 Patentblatt 92/21**

(84) Benannte Vertragsstaaten: **DE FR GB IT NL**

(71) Anmelder: **HÜLS AKTIENGESELLSCHAFT**
**Patentabteilung / PB 15 - Postfach 13 20**
**W-4370 Marl 1(DE)**

(72) Erfinder: **Mügge, Joachim, Dr.**
**Kantstrasse 14**
**W-4358 Haltern(DE)**
Erfinder: **Kowalczik, Udo, Dr.**
**Am Nordbad 106**
**W-4630 Bochum 1(DE)**
Erfinder: **Schmidt, Friedrich-Georg, Dr.**
**Brukterer Strasse 46**
**W-4358 Haltern(DE)**

(54) **Thermoplastische Formmassen auf Basis von Polyphenylenethern und Polyamiden.**

(57) 2. Ziel war, auf einfache Weise schlagzähe Formmassen auf Basis von Polyphenylenethern und Polyamiden herzustellen. Dies wurde erreicht durch Formmassen, die folgende Komponenten enthalten:

a) 3 bis 80 Gew.-Teile Polyphenylenether;
b) 20 bis 97 Gew.-Teile Polyamide;
c) 0,1 bis 10 Gew.-Teile Carbonate der allgemeinen Formel

$$X\text{-}O\text{-}\overset{\overset{O}{\|}}{C}\text{-}O\text{-}Y,$$

wobei X und Y unabhängig voneinander einen Alkyl-, Cycloalkyl-, Aryl- oder substituierten Arylrest mit jeweils bis zu 12 C-Atomen bedeuten;
d) 0 bis 30 Gew.-Teile Schlagzähmacher;
e) 0 bis 75 Gew.-Teile weitere Polymere.

Diese Formmassen können zu Formkörpern beispielsweise für den Automobil-, Elektro- und Feinwerksektor verarbeitet werden.

EP 0 485 713 A1

Polyphenylenether (PPE) sind technische Hochleistungsthermoplaste mit hohen Schmelzviskositäten und Erweichungspunkten. Sie eignen sich für zahlreiche technische Anwendungen, bei denen es auf Beständigkeit bei hohen Temperaturen ankommt (vgl. US-PSS 3 306 874, 3 306 875, 3 257 357 und 3 257 358). Gewisse Eigenschaften der Polyphenylenether sind für technische Anwendungen unerwünscht. Beispielsweise sind Formteile aus Polyphenylenethern aufgrund schlechter Schlagzähigkeit spröde.

Nachteilig sind auch die hohen Schmelzviskositäten, die zu Schwierigkeiten bei der Verarbeitung führen. Es ist zu berücksichtigen, daß Polyphenylenether bei hohen Temperaturen zu Instabilität und Verfärbung neigen.

Polyphenylenether sind in vielen organischen Lösemitteln löslich oder quellen sehr stark. Dies hat zur Folge, daß sie für Anwendungen, bei denen sie in Kontakt mit solchen Lösemitteln kommen, nicht geeignet sind.

Es ist bekannt, daß die Eigenschaften von Polyphenylenetherharzen durch Abmischen mit anderen Polymeren verbessert werden können. So haben z. B. Abmischungen von Polyphenylenethern mit schlagzähen Polystyrolen eine größere technische Bedeutung erlangt (vgl. DE-PSS 21 19 301 und 22 11 005). Diese Abmischungen lassen sich gut zu Formteilen mit ausreichender Zähigkeit verarbeiten, weisen jedoch den Nachteil auf, daß mit zunehmendem Polystyrolgehalt die Wärmeformbeständigkeit abnimmt. Auch bei diesen Abmischungen ist die Lösemittelbeständigkeit unbefriedigend.

Abmischungen von Polyphenylenethern mit Polyamiden weisen zwar eine gute Fließfähigkeit und eine gute Lösemittelbeständigkeit auf (DE-OS 16 94 290, JP-A-78/47 390), es werden aber in der Regel spröde Produkte erhalten, da die beiden Komponenten schlecht ineinander dispergierbar sind. Eine bessere Verträglichkeit der beiden Phasen wird durch eine Funktionalisierung des Polyphenylenethers, z. B. mit Maleinsäureanhydrid in Gegenwart von Radikalbildnern, erreicht (JP-OS 84/66 452). Die Verwendung von Radikalbildnern kann jedoch zu einer unerwünschten und unkontrollierten partiellen Vergelung der PPE-Phase führen.

Es ist daher vorgeschlagen worden, die Verträglichkeit beider Polymeren durch Zusatz einer ausreichenden Menge eines Fließmittels, z. B. eines organischen Phosphats (vgl. EP-OS 0 129 825) oder eines Diamids (vgl. EP-OS 0 115 218), zu erhöhen. Solche Lösungen vermögen nicht zu überzeugen, da die verbesserte Verträglichkeit mit einer reduzierten Wärmeformbeständigkeit erkauft werden muß. Den gleichen Nachteil weisen Formmassen auf, denen Copolymere aus Styrol und ungesättigten Säurederivaten zugesetzt worden sind (vgl. EP-OS 0 046 040).

Gegenstand der EP-PS 0 024 120 sind Harzmassen, die aus einem Polyphenylenether, einem Polyamid, einer dritten Komponente und gegebenenfalls hochmolekularen Kautschuk-Polymeren bestehen. Als dritte Komponente wird ein flüssiges Dienpolymer, ein Epoxid oder eine Verbindung mit einer Doppel- oder Dreifachbindung und einer funktionellen Gruppe (wie z. B. Säure, Anhydrid, Ester, Amino- oder Alkoholgruppe) eingesetzt. Die Zähigkeit der erhaltenen Harzmassen reicht aber für viele Anwendungen nicht aus. Es kommt hinzu, daß die meisten angegebenen Verträglichkeitsvermittler, wie z. B. Maleinsäureanhydrid, toxisch und leicht flüchtig sind. Infolgedessen kommt es bei der Verarbeitung zu einer starken Belästigung des Bedienungspersonals.

In der JP-OS 84/86 653 wird ein Verfahren beschrieben, wonach man 100 Teile Polyphenylenether mit 10 bis 300 Teilen einer Mischung aus 50 bis 99 % Styrol und 50 bis 1 % ungesättigten Carbonsäuren oder deren Anhydriden radikalisch pfropft. Das Produkt wird mit Polyamiden abgemischt; die entstehenden Formmassen weisen zwar sehr gute mechanische Eigenschaften auf, doch sinkt infolge des beträchtlichen Polystyrolanteils die Wärmeformbeständigkeit stark ab.

In der WO 85/05 372 wird eine Funktionalisierung von Polyphenylenethern durch Umschmelzen mit Hydroxypolycarbonsäuren bzw. deren Derivaten beschrieben. Nach Abmischen mit Polyamiden erhält man Formmassen, deren Reißdehnungs- und Kerbschlagwerte auf eine nicht befriedigende Anbindung an den Phasengrenzflächen schließen lassen. Die Verwendung von starken organischen Säuren sowie die Anwesenheit von Wasser, das bei der Funktionalisierung gebildet wird, führen dazu, daß man im Dauerbetrieb mit ernsten Korrosionsproblemen rechnen muß.

Analog dazu wird in der WO 86/02 086 ein Polyphenylenether durch Reaktion mit Trimellitsäureanhydridchlorid in Lösung funktionalisiert. Die Blends mit Polyamiden scheinen zwar tendenziell besser als im vorherigen Fall zu sein, jedoch weist dieses Verfahren den großen Nachteil auf, daß entweder Chlorwasserstoff entsteht oder daß die Polyphenylenetherlösung - bei Zusatz eines tertiären Amins - beträchtliche Mengen an Chloriden enthält, die wegen ihrer korrosiven Wirkung auf Maschine und Form vor dem Abmischen restlos abgetrennt werden müssen. Eine Direktisolation des Polyphenylenethers durch Abziehen des Lösemittels, die dem Ausfällen mit Methanol wirtschaftlich überlegen ist, ist in diesem Fall nicht möglich.

Als weitere Beispiele für eine Modifizierung des Polyphenylenethers in der Schmelze seien genannt: EP-OS 0 301 004, WO 87/05334, EP-OS 0 302 897, EP-OS 0 253 123, EP-OS 0 302 485, EP-OS 0 298 365 und EP-OS 299 619.

Sie weisen jedoch den Nachteil auf, daß speziell hergestellte und teure, aggressive bzw. gesundheitsgefährdende Stoffe eingesetzt werden. Weiterhin reichen die Zähigkeitswerte für viele Anwendungen nicht aus. Ziel der Erfindung war es, diese Nachteile zu vermeiden und Formmassen zu erhalten, die leicht verarbeitbar sind und sich für die Herstellung von lösemittelbeständigen und schlagzähen Formteilen mit hoher Wärmeformbeständigkeit eignen.

Es wurden jetzt Formmassen gefunden, die diesen Ansprüchen gerecht werden und folgende Komponenten enthalten:

a) 3 bis 80 Gew.-Teile Polyphenylenether;

b) 20 bis 97 Gew.-Teile Polyamide,

wobei die Summe aus a) und b) 100 Gew.-Teile ergibt;

c) 0,1 bis 10 Gew.-Teile Carbonate der allgemeinen Formel

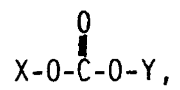

wobei X und Y unabhängig voneinander einen Alkyl-, Cycloalkyl-, Aryl- oder substituierten Arylrest mit jeweils bis zu 12 C-Atomen bedeuten;

d) 0 bis 30 Gew.-Teile Schlagzähmacher;

e) 0 bis 75 Gew.-Teile weitere Polymere.

Als Polyphenylenether kommen Polymere in Frage, die aus folgenden Einheiten aufgebaut sind:

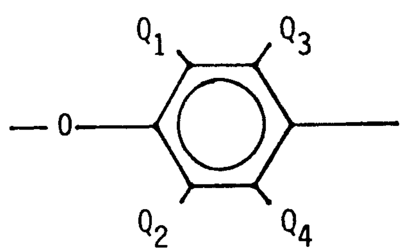

Hierbei sind $Q_1$ und $Q_2$ entweder Alkylreste mit 1 bis 10 C-Atomen, die vorzugsweise primär sind, Cycloalkylreste mit 5 bis 10 C-Atomen, Benzylreste mit 7 bis 10 C-Atomen oder Arylreste mit 6 bis 10 C-Atomen. $Q_3$ und $Q_4$ können die gleiche Bedeutung wie $Q_1$ und $Q_2$ haben; vorzugsweise bedeuten sie jedoch Wasserstoff.

Diese Polyphenylenether können nach jedem dem Stand der Technik entsprechenden Verfahren hergestellt werden. Üblicherweise werden die entsprechenden Phenole mit einem Sauerstoff enthaltenden Gas, wie z. B. Luft, in Gegenwart eines Katalysatorkomplexes oxidativ gekuppelt. Bei Einsatz eines in para-Stellung halogenierten Phenols muß eine ausreichende Menge an Säureacceptor anwesend sein. Vorzugsweise werden als Katalysatoren Kupfer-Amin-Komplexe oder manganhaltige Systeme benutzt (DE-OSS 32 24 691 und 32 24 692 sowie US-PSS 3 306 874, 3 306 875 und 4 028 341). Die Viskositätszahlen J, bestimmt nach DIN 53 728 in Chloroform bei 25 °C, liegen im Bereich von 20 bis 80 $cm^3/g$ (Konzentration 5 g/l), vorzugsweise im Bereich von 40 bis 70 $cm^3/g$.

Zur Herstellung dieser Polyphenylenether können beispielsweise folgende Monomere eingesetzt werden: 4-Brom-2,6-dimethylphenol, 2-Methyl-6-ethylphenol, 2,6-Diethylphenol, 2-Methyl-6-tert.-butylphenol, 4-Brom-2,6-diphenylphenol, 2-Benzyl-6-methylphenol, 2,6-Dibenzylphenol, 2,3,6-Trimethylphenol oder bevorzugt 2,6-Dimethylphenol. Selbstverständlich können auch Gemische derartiger Phenole verwendet werden.

Mit umfaßt werden natürlich auch modifizierte Polyphenylenether, z. B. Pfropfcopolymere mit Vinylmonomeren, Styrol oder anderen Modifizierungsreagenzien.

Selbstverständlich können die Polyphenylenether dem Stand der Technik entsprechend auch geregelt sein, beispielsweise mit 2,4,6-Trimethylphenol, 2-(4-Hydroxy-3,5-dimethylphenyl)-ethanol, 4-Benzyl-2,6-dimethylphenoloder Tetramethylbisphenol A. Hierbei ist jedoch darauf zu achten, daß durch die Regelung das Molekulargewicht hoch genug bleibt, um eine Viskositätszahl J im obengenannten Bereich zu ergeben.

Im bevorzugten Bereich werden 10 bis 70 Gew.-Teile, ganz besonders bevorzugt 30 bis 60 Gew.-Teile Polyphenylenether, verwendet.

Als Polyamide kommen Homo- und Copolymere in Frage, die vorzugsweise ausschließlich aliphatischer Struktur sind. Insbesondere seien hier die 6-, 46-, 66-, 612-, 1010-, 1012-, 11-, 12- und 1212-Polyamide aufgeführt. Die Kennzeichnung der Polyamide entspricht internationaler Norm, wobei die erste(n) Ziffer(n) die C-Atomzahl des Ausgangsamins und die letzte(n) Ziffer(n) die C-Atomzahl der Dicarbonsäure angeben. Wird nur eine Zahl angegeben, so bedeutet dies, daß von einer Aminocarbonsäure bzw. deren Lactam ausgegangen wird (H. Domininghaus, "Die Kunststoffe und ihre Eigenschaften", VDI Verlag, 1976, Seite 272). Geeignet sind aber auch gemischte aliphatisch-aromatische Copolyamide (vgl. US-PSS 2 071 250, 2 071 251, 2 130 523, 2 130 948, 2 241 322, 2 312 966, 2 512 606, 3 393 210; Kirk-Othmer, Encyclopedia of chemical technology, Vol. 18, John Wiley & Sons (1982), Seiten 328 und 435). Das Zahlenmittel des Molekulargewichts der Polyamide sollte über 5 000, vorzugsweise über 10 000, liegen.

Im bevorzugten Bereich enthalten die Formmassen 30 bis 90 Gew.-Teile, ganz besonders bevorzugt 40 bis 70 Gew.-Teile, Polyamide.Die erfindungsgemäß einzusetzenden Carbonate haben die allgemeine Formel

$$X\text{-}O\text{-}\overset{\overset{\displaystyle O}{\|}}{C}\text{-}O\text{-}Y$$

wobei X und Y unabhängig voneinander einen Alkyl-, Cycloalkyl, Aryl-, oder substituierten Arylrest mit jeweils bis zu 12 C-Atomen bedeuten. Bevorzugt werden Carbonate, bei denen X und Y unabhängig voneinander einen Alkyl- oder Arylrest mit bis zu 10 C-Atomen bedeuten.

Beispielsweise können Dimethylcarbonat, Diethylcarbonat, Di-n-butylcarbonat, Diphenylcarbonat, Bis-(2,4-dichlorphenyl)carbonat, Bis-(p-isooctyloxycarbonyl-phenyl)carbonat, Bis-(p-phenylsulfonyl-phenyl)-carbonat oder Bis-(o-phenylsulfonyl-phenyl)carbonat verwendet werden. In einer bevorzugten Ausführungsform ist mindestens einer der Substituenten X und Y ein Arylrest.

Die Formmassen enthalten hierbei bevorzugt 0,2 bis 5,0 Gew.-Teile, besonders bevorzugt 0,5 bis 2 Gew.-Teile dieser Carbonate.

Als gegebenenfalls in den erfindungsgemäßen Formmassen enthaltene Schlagzähkomponenten sind beispielsweise folgende Verbindungen geeignet: Ethylen-Propylen-Copolymere (EPM), Ethylen-Propylen-Dien-Terpolymere (EPDM), Polypentenylen, Polyoctenylen und statistische oder Blockcopolymere aus alkenylaromatischen Verbindungen mit Olefinen oder Dienen. Bevorzugt werden bei den Blockcopolymeren Produkte aus Styrol mit Butadien, Isopren bzw. Ethylen/Butylen. Ganz besonders bevorzugt sind Triblockcopolymere mit Polystyrol-Endblöcken. Derartige Verbindungen sind kommerziell erhältlich, z. B. von der Shell Chemical Company unter dem Markennamen KRATON$^R$.

In einer weiteren bevorzugten Ausführungsform wird als Schlagzähkomponente Polyoctenylen eingesetzt.

Die Schlagzähkomponente kann dem Stand der Technik entsprechend funktionalisiert sein, z. B. mit Maleinsäureanhydrid, Acrylsäure oder Glycidylmethacrylat, gegebenenfalls in Anwesenheit weiterer pfropfaktiver Substanzen.

Weiterhin können als Komponente e) noch andere Polymere enthalten sein. Hier kommen vor allem Styrolpolymerisate, Polyester und/oder Polycarbonate in Frage.

Die Styrolpolymerisate müssen mit dem Polyphenylenether verträglich sein. Beispielsweise können folgende Polymere verwendet werden: glasklares Polystyrol; Copolymere von Styrol mit anderen Monomeren, wie Maleinsäureanhydrid, Acryl- oder Methacrylsäurederivaten wie Acrylamid, Methylmethacrylat oder Hydroxyethylmethacrylat, Maleinsäureimiden oder Acrylnitril; schlagzähes Polystyrol (HIPS) oder Pfropfprodukte der vorstehend beschriebenen Copolymeren auf einen Kautschuk.

Die Polyester enthalten Struktureinheiten der Formel

$$-O-R_1-O-\overset{\overset{O}{\|}}{C}-R_2-\overset{\overset{O}{\|}}{C}- \quad ,$$

wobei

$R_1$ = divalenter aliphatischer oder alicyclischer Kohlenwasserstoffrest mit 2 bis 12 und bevorzugt 2 bis 8 C-Atomen

und

$R_2$ = divalenter aromatischer Rest mit 6 bis 20 C-Atomen.

Als Diolkomponente kommen hier beispielsweise Ethylenglykol, Trimethylenglykol, Tetramethylenglykol, Hexamethylenglykol, 1,4-Cyclohexandimethanol und Neopentylglykol und als Dicarbonsäurekomponente beispielsweise Isophthalsäure, Terephthalsäure, 2,6-, 2,7-, 1,5-, 1,4-Naphthalindicarbonsäure, Diphensäure und Diphenylether-4,4'-dicarbonsäure in Frage. Ein Teil dieser Diolkomponente kann in bekannter Weise durch eine Verbindung $HO\!\left(R_3\text{-}O\right)_xH$ mit x mindestens gleich 10 ersetzt werden, wobei $R_3$ eine zweiwertige gesättigte Gruppe mit 2 bis 4 C-Atomen bedeutet. Genauso können maximal 20 Mol-% der Dicarbonsäurekomponente durch aliphatische Dicarbonsäuren mit 2 bis 12 C-Atomen, wie z. B. Bernsteinsäure, Malein- oder Fumarsäure, Adipinsäure, Sebacinsäure und Dodecandisäure ersetzt sein.Die Darstellung dieser Polyester erfolgt üblicherweise durch Kondensation eines Diols, z. B. Ethylenglykol, 1,4-Butandiol oder 1,4-Cyclohexandimethanol mit einer aromatischen Dicarbonsäure, wie z. B. Isophthal- oder Terephthalsäure oder deren Ester. Bevorzugt werden als Polyester Polyethylenterephthalat oder Polybutylenterephthalat verwendet.

Verfahren zur Herstellung dieser Polyester sind in der Literatur ausführlich beschrieben (z. B. Ullmanns Enzyklopädie der technischen Chemie, 4. Auflage, Band 19, Seite 61 ff., sowie DE-OS 24 07 155 und DE-OS 24 07 156).

Als Polycarbonate kommen insbesondere die aromatischen Typen in Frage, die dem Fachmann allgemein bekannt sind; vgl. z. B. Kirk-Othmer, Encyclopedia of chemical technology, Vol. 18, John Wiley & Sons (1982), Seite 479 bis 494. Sie werden durch Reaktion eines Bisphenols mit einer Carbonatvorstufe, wie Phosgen, einem Chlorkohlensäureester oder Kohlensäurediester erhalten. Typische Bisphenole sind Bisphenol T, Tetramethylbisphenol A oder Tetramethylbisphenol S. Das bevorzugte Polycarbonat ist das Homopolymere, das sich von Bisphenol A herleitet.

Um die Eigenschaften der Grundmischung aus PPE und Polyamid (Komponenten a und b) nicht zu sehr zu überdecken, enthalten die Formmassen bevorzugt maximal 50 Gew.-Teile dieser weiteren Polymeren (Komponente e).

Die Formmassen können zusätzlich in geringen Mengen (üblicherweise 0 bis 0,1 Gew.-Teile) einen Katalysator enthalten. Derartige Katalysatoren sind z. B. aprotische Stickstoffbasen wie Triethylamin, Dimethylaminopyridin oder Pyridin bzw. metallorganische Verbindungen auf Basis Sn oder Ti wie beispielsweise Sn(II)-isooctanoat, Dibutyl-Zinn-(IV)-oxid oder Titantetraisopropylat oder ionogene Verbindungen wie KOH, Natriumacetat oder Natriumphenolat.

Die erfindungsgemäßen thermoplastischen Massen können daneben einen Flammschutz sowie weitere Zusatzstoffe, wie Pigmente, Oligo- und Polymere, Antistatika, Stabilisatoren und Verarbeitungshilfsmittel sowie Verstärkungsmittel, enthalten. Der Anteil der Verstärkungsmittel kann bis zu 50 %, der der Flammschutzmittel bis zu 15 % und der aller übrigen Zusatzstoffe insgesamt bis zu 5 %, jeweils bezogen auf die gesamte Formmasse, betragen.Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. In Frage kommen dabei Halogen enthaltende organische Verbindungen, wie sie z. B. in der Monographie von H. Vogel "Flammfestmachen von Kunststoffen", Hüthig-Verlag, 1966, auf den Seiten 94 bis 102 beschrieben werden. Es kann sich dabei aber auch um halogenierte Polymere, wie z. B. halogenierte Polyphenylenether (siehe DE-OS 33 34 068) oder bromierte Oligo- bzw. Polystyrole, handeln. Die Verbindungen sollen mehr als 30 Gewichtsprozent Halogen enthalten.

Im Falle des Einsatzes von halogenhaltigen Flammschutzmitteln empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.Als Verstärkungsmittel eignen sich insbesondere Glas- und Kohlenstoffasern.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Die Herstellung dieser Formmassen erfolgt zweckmäßigerweise durch Mischen dieser Komponenten bei Temperaturen im Bereich von 220 bis 350 °C in der Schmelze in üblichen Mischvorrichtungen, wie z. B. Knetern oder Extrudern.

Die erfindungsgemäßen Formmassen werden bevorzugt dadurch hergestellt, daß zunächst der Polyphenylenether, gegebenenfalls in Gegenwart eines Katalysators, einer Schlagzähkomponente und/oder eines Styrolpolymerisats, mit dem Carbonat zusammen aufgeschmolzen und vermischt wird. Dazu kann beispielsweise ein kontinuierlich arbeitender, gleichsinnig drehender Zweiwellenkneter verwendet werden. Die Schmelztemperatur liegt hierbei zwischen 250 und 350 °C, vorzugsweise zwischen 290 °C und 330 °C. Eine gleichzeitige Entgasung der Schmelze ist zweckmäßig.

Im zweiten Schritt werden das Polyamid sowie gegebenenfalls die übrigen Bestandteile bei Temperaturen zwischen 250 und 350 °C, bevorzugt zwischen 280 und 320 °C in einem gut knetenden Mischaggregat wie z. B. einem Knetblöcke enthaltenden Zweiwellenextruder, vorzugsweise bei gleichzeitiger Entgasung der Schmelze zur Entfernung flüchtiger Produkte, eingearbeitet.

Alternativ kann in einer anderen Verfahrensweise im ersten Schritt das Polyamid mit dem Carbonat und gegebenenfalls weiteren Komponenten bei Temperaturen zwischen 220 und 350 °C, vorzugsweise unter Entgasungsbedingungen umgeschmolzen werden. Im zweiten Schritt werden der Polyphenylenether sowie gegebenenfalls weitere Komponenten bei Temperaturen zwischen 250 und 350 °C, bevorzugt zwischen 280 und 320 °C eingearbeitet.

Die erhaltenen Formmassen lassen sich mit den für die Thermoplastverarbeitung üblichen Verfahren, wie z. B. Spritzgießen und Extrusion, zu Formkörpern verarbeiten.

Beispiele für technische Anwendungsgebiete sind Rohre, Platten, Gehäuse und sonstige technische Artikel für den Automobil-, Elektro- und Feinwerksektor.

Die Viskositätszahl J des Polyphenylenethers wird nach DIN 53 728 bei 25 °C in Chloroform gemessen (Konzentration: 5 g/l).

Die relative Viskosität ($\eta_{rel}$) des Polyamids wird nach DIN 53 727 bei 25 °C in m-Kresol gemessen.

Die Kerbschlagzähigkeit ($a_K$) wird nach ISO 180/4A an bei 290 °C gespritzten Izod-Stäben bestimmt.

Die Reißdehnung ($\epsilon_R$) wird nach DIN 53 455 an bei 290 °C gespritzten Schulterstäben bestimmt.

<u>Beispiele:</u>

1. Als Polyphenylenether werden eingesetzt
   - A 1: ein Poly(2,6-dimethyl-1,4-phenylenether) mit einem J-Wert von 61 $cm^3/g$
   - A 2: ein Poly(2,6-dimethyl-1,4-phenylenether) mit einem J-Wert von 52 $cm^3/g$
2. Als Polyamidkomponente wird eingesetzt
   - B: VESTAMID$^R$ X 4887 (Hüls AG), ein Polyamid 12 mit einem $\eta_{rel}$-Wert von 1,9
3. Als Schlagzähmacher werden eingesetzt
   - C 1: KRATON$^R$ G 1650 (Shell Chem. Co.)
   - C 2: VESTENAMER$^R$ 8012 (Hüls AG)
4. Als Carbonat wird eingesetzt
   - D: Diphenylcarbonat
5. Als Katalysator wird eingesetzt
   - E: 4-N,N-Dimethylaminopyridin

Die in den folgenden Tabellen angegebenen Gewichtsteile der einzelnen Komponenten werden auf einem Doppelschneckenextruder Berstorff ZE 25 geschmolzen, gemischt und granuliert. Zur Entfernung flüchtiger Bestandteile wird die Schmelze durch Anlegen eines verminderten Druckes entgast.

Die Vormischungen A 11 - A 16 und A 21 - A 23 sowie B 11 in Tabelle 1 werden bei einer Temperatur von 300 °C, einer Schneckendrehzahl von 100 $min^{-1}$ und einem Massedurchsatz von 2,5 kg/h erhalten.

Die erfindungsgemäßen Formmassen 1 - 9 sowie die Vergleichsversuche V1 - V2 werden bei 290 °C, 250 $min^{-1}$ und 3 kg/h erhalten.

Tabelle 1

| Vormischung / Einsatz Komponente | A 11 | A 12 | A 13 | A 14 | A 15 | A 16 | A 21 | A 22 | A 23 | B 11 |
|---|---|---|---|---|---|---|---|---|---|---|
| A 1 | 100 | 100 | 100 | 100 | 90 | 90 | - | - | - | - |
| A 2 | - | - | - | - | - | - | 100 | 100 | 100 | - |
| B | - | - | - | - | - | - | - | - | - | 100 |
| C 2 | - | - | - | - | 10 | 10 | - | - | - | - |
| D | 1 | 2 | 5 | 10 | - | 2 | 10 | 2 | 2 | 1,3 |
| E | - | - | - | - | - | - | - | - | 0,02 | - |

Tabelle 2

| Einsatz Komponente \ Versuch | 1 | 2 | 3 | 4 | 5 | 6 | 7 | V1 | V2 | 8 | 9 |
|---|---|---|---|---|---|---|---|---|---|---|---|
| A 1 | | | | | | | | 40 | | | 40 |
| A 11 | 40 | | | | | | | | | | |
| A 12 | | 40 | | | | | | | | | |
| A 13 | | | 40 | | | | | | | | |
| A 14 | | | | 40 | | | | | | | |
| A 15 | | | | | | | | | 40 | | |
| A 16 | | | | | | | | | | 40 | |
| A 21 | | | | | 40 | | | | | | |
| A 22 | | | | | | 40 | | | | | |
| A 23 | | | | | | | 40 | | | | |
| B 11 | | | | | | | | | | | 60 |
| B | 60 | 60 | 60 | 60 | 60 | 60 | 60 | 60 | 60 | 60 | |
| C 1 | 10 | 10 | 10 | 10 | 10 | 10 | 10 | 10 | | | 10 |
| $a_K$ | 39 | 39 | 18 | 16 | 20 | 24 | 37 | 8 | 4 | 28 | 15 |
| $\epsilon_R$ | 165 | 171 | 115 | 88 | 123 | 100 | 156 | 6 | 4 | 143 | 60 |

V1, V2: nicht erfindungsgemäße Vergleichsbeispiele

## Patentansprüche

**1.** Thermoplastische Formmassen auf Basis von Polyphenylenethern und Polyamiden, die folgende Komponenten enthalten:

a) 3 bis 80 Gew.-Teile Polyphenylenether;
b) 20 bis 97 Gew.-Teile Polyamide,
wobei die Summe aus a) und b) 100 Gew.-Teile ergibt;

c) 0,1 bis 10 Gew.-Teile Carbonate der allgemeinen Formel

$$X-O-\overset{\overset{O}{\|}}{C}-O-Y,$$

wobei X und Y unabhängig voneinander einen Alkyl-, Cycloalkyl-, Aryl- oder substituierten Arylrest mit jeweils bis zu 12 C-Atomen bedeuten;
d) 0 bis 30 Gew.-Teile Schlagzähmacher;
e) 0 bis 75 Gew.-Teile weitere Polymere.

**2.** Thermoplastische Formmassen gemäß Anspruch 1,
dadurch gekennzeichnet,
daß als Komponente a) ein Polyphenylenether auf Basis von 2,6-Dimethylphenol enthalten ist.

**3.** Thermoplastische Formmassen gemäß den Ansprüchen 1 oder 2,
dadurch gekennzeichnet,
daß im Carbonat (Komponente c) mindestens einer der Substituenten X und Y ein Arylrest ist.

**4.** Thermoplastische Formmassen gemäß Anspruch 3,
dadurch gekennzeichnet,
daß als Carbonat Diphenylcarbonat enthalten ist.

**5.** Thermoplastische Formmassen gemäß den Ansprüchen 1 bis 4,
dadurch gekennzeichnet,
daß als Schlagzähkomponente (Komponente d) Triblockcopolymere mit Polystyrol-Endblöcken oder Polyoctenylen enthalten sind.

**6.** Thermoplastische Formmassen gemäß den Ansprüchen 1 bis 5,
dadurch gekennzeichnet,
daß die Komponente e) aus Styrolpolymerisaten, Polyestern und/oder Polycarbonaten besteht.

**7.** Verfahren zur Herstellung der Formmassen gemäß den Ansprüchen 1 bis 6,
dadurch gekennzeichnet,
daß die Komponenten bei Temperaturen im Bereich von 220 bis 350 °C in der Schmelze gemischt werden.

**8.** Verfahren gemäß Anspruch 7,
dadurch gekennzeichnet,
daß in einem ersten Schritt der Polyphenylenether, gegebenenfalls in Gegenwart eines Katalysators, einer Schlagzähkomponente und/oder eines Styrolpolymerisats, mit dem Carbonat zusammen bei Temperaturen zwischen 250 und 350 °C aufgeschmolzen und vermischt wird, wonach in einem zweiten Schritt das Polyamid sowie gegebenenfalls die übrigen Bestandteile bei Temperaturen zwischen 250 und 350 °C eingearbeitet werden.

**9.** Verfahren gemäß Anspruch 7,
dadurch gekennzeichnet,
daß in einem ersten Schritt das Polyamid mit dem Carbonat und gegebenenfalls weiteren Komponenten bei Temperaturen zwischen 200 und 350 °C umgeschmolzen wird und in einem zweiten Schritt der Polyphenylenether sowie gegebenenfalls die weiteren Komponenten bei Temperaturen zwischen 250 und 350 °C eingearbeitet werden.

**10.** Formkörper, hergestellt aus den Formmassen gemäß den Ansprüchen 1 bis 6.

Europäisches Patentamt

# EUROPÄISCHER RECHERCHENBERICHT

Nummer der Anmeldung

EP 91 11 5646

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 295 103 (SUMITOMO)<br>--- | | C 08 L 77/00<br>C 08 L 71/12<br>C 08 K 5/10 //<br>(C 08 K 5/10<br>C 08 L 77:00<br>C 08 L 71:12 ) |
| A | EP-A-0 337 814 (SUMITOMO)<br>--- | | |
| A | EP-A-0 373 900 (MITSUBISHI)<br>--- | | |
| A | WO-A-8 705 304 (GENERAL ELECTRIC)<br>--- | | |
| D,A | EP-A-0 024 120 (SUMITOMO)<br>----- | | |
| | | | **RECHERCHIERTE SACHGEBIETE (Int. Cl.5)** |
| | | | C 08 L<br>C 08 K |

Der vorliegende Recherchenbericht wurde für alle Patentansprüche erstellt

| Recherchenort | Abschlußdatum der Recherche | Prüfer |
|---|---|---|
| DEN HAAG | 19-02-1992 | LEROY ALAIN |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)